(19) **Europäisches Patentamt / European Patent Office / Office européen des brevets**

(11) **EP 1 676 049 B1**

(12) **EUROPEAN PATENT SPECIFICATION**

(45) Date of publication and mention
of the grant of the patent:
**25.07.2007 Bulletin 2007/30**

(51) Int Cl.:
***F16G 5/16*** (2006.01)

(21) Application number: **04775002.1**

(22) Date of filing: **08.10.2004**

(86) International application number:
**PCT/NL2004/000707**

(87) International publication number:
**WO 2005/036024 (21.04.2005 Gazette 2005/16)**

(54) **PUSH BELT**

SCHUBRIEMEN

COURROIE DE POUSSEE

(84) Designated Contracting States:
**AT BE BG CH CY CZ DE DK EE ES FI FR GB GR
HU IE IT LI LU MC NL PL PT RO SE SI SK TR**

(30) Priority: **13.10.2003 EP 03078220**

(43) Date of publication of application:
**05.07.2006 Bulletin 2006/27**

(73) Proprietor: **ROBERT BOSCH GMBH
70442 Stuttgart (DE)**

(72) Inventors:
• **VAN DER MEER, Cornelis, Johannes, Maria
5032 XG Tilburg (NL)**

• **MUTSAERS, Robert, Arnoldus, Andreas
5062 LV Oisterwijk (NL)**
• **PRINSEN, Lucas, Hendricus, Robertus, Maria
5175 AC Loon Op Zand (NL)**

(74) Representative: **Plevier, Gabriel Anton Johan
Maria
Van Doorne's Transmissie B.V.,
Patents Department,
Postbus 500
5000 AM Tilburg (NL)**

(56) References cited:
**EP-A- 0 329 206          EP-A- 0 626 526
EP-A- 0 781 939          US-A1- 2001 053 726
US-B1- 6 440 024**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a push belt for a continuously variable transmission, in particular for a motor vehicle, as defined in the preamble of claim 1.

Such a belt is generally known in the art, in particular from the Dutch patent application NL-1022022, which document is regarded included here by reference and which has not yet been published at the time of filing of the present application, and from the European patent applications EP-A-0329206 and EP-A-0626526, all in the name of Applicant. The said Dutch patent application discloses the desire to realise a belt design comprising transverse elements in which a projection and a hole that are conventionally provided may be obviated.

Such commonly provided, mutually matching projection and hole is e.g. known via European patent publication EP-A-0329206, in which document the projections are shaped conical. However, a cylindrically shaped projection is applied most commonly. The projection and hole are thereby designed to allow only a limited amount of play between adjacent elements in any direction transversely oriented with respect to the longitudinal direction of the belt. The projection and hole serve to prevent the element from tumbling one over the other at entry in a pulley, here denoted as element pitching, whereby the elements rotate around the axial direction and thereby slide over one another in a predominantly radial direction. In the conventional element design, such mutual sliding of adjacent elements is limited by the projection of a succeeding element being confined by the hole of a preceding element.

The said desire to omit at least part of a projection as expressed in NL-1022022 has arisen from the complications experienced at manufacture of these transverse elements. At entirely obviating such projection and hole, however, alternative means should be provided to limit the above-mentioned mutual sliding in radial direction. In the belt according to the said prior art document it is suggested to design an upper part of the element with arm parts extending up into an imaginary plane of contact with the sheaves of a pulley in which the belt is intended to run. In practice it appeared, however, that whilst the problem of element pitching was favourably tackled, the operation of such belt was not optimal in that in certain circumstances slip of the belt relative to a pulley occurred unexpectedly.

Closer analysis revealed that the elements of this type of belt were sometimes taken up by the pulley in a skewed orientation, i.e. rotated around the radial direction whereby the elements have slid over one another in a predominantly axial direction, which movement is defined here as element yawing. Thus, when looking at a trajectory part of the belt between the sheaves of a pulley that is bent in the longitudinal direction thereof, the elements are then oriented at an angle with the axial direction as defined with respect to the pulley. It appeared that in such skewed orientation a clamping force exerted by the pulley sheaves on either side of the elements located in the said bent trajectory part was partly wasted and, consequently, that a torque transmittable between the pulleys of the transmission by means of friction was considerably less than what was expected.

Where in the prior art many measures are known to provide for proper entry of the elements into a pulley, for example by prohibiting mutual pitching, limiting mutual rotation or by promoting axial pre-positioning of elements before entry, it is now an object of the invention, to provide for and quantify a measure promoting the axial orientation at entry into a pulley and maintain such orientation between the sheaves thereof, whereby the said element yawing is avoided to a large extend and torque may transmitted between the pulleys efficiently, and, wherever possible, to simultaneously provide for a less complicated, easy to manufacture element design.

According to the invention these objects may be realised by applying the characterising feature of claim 1. With such feature, a belt element entering a pulley is not only prevented from pitching, either by the presence of upper element parts for contacting the pulley, i.e. the said arm parts, or by the presence of a projection that engages a hole of a preceding element in radial direction, but is also prevented from yawing, at least to an extend that could compromise an efficient torque transmission.

In accordance with the invention, the amount of axial play between (the projection and hole) of adjacent elements should be defined in relation to the (axial) width and the (longitudinal) thickness of the elements as incorporated in the belt relative to the pulley sheaves. Hereby, the axial play is defined by the maximum possible amount of linear axial displacement of one of two adjacent elements to only one side, i.e. starting from the respective projection being located centrally in the respective hole and moving the said projection laterally towards one side (i.e. either to the left or to the right) until it engages a wall of the said hole. For a symmetrically designed projection and hole, the axial play defined in accordance with the present invention thus amounts to half a total amount of transverse movement possible between the adjacent elements.

With the measure according to the invention the said element yawing is limited such that it is prevented that the element assumes an unfavourable skewed orientation, i.e. the measure effects that under all circumstances the clamping force exerts a moment on the element that counteracts the element yawing, preferably forcing the element back into a predominantly axially (width-wise) aligned orientation.

Theoretically, the amount of axial play provided is as large is possible, ideally being equal to the upper boundary therefor as defined per claim 1, however, in accordance with a first refinement of the invention, it is noted that it is in practice preferable to provide for a safety margin between the theoretically maximum allowable axial play and the practically applied axial play. According to the invention a factor between 90 to 95% may provide a suitable margin in this respect.

It is further noted that the elements may undergo not only the said element pitching in dependence on the amount of a radial play between the projection and hole, but may a/o also rotate slightly around the longitudinal direction of the belt. Each such element movement may result in a less than perfect alignment of the element with respect the pulley sheaves. This phenomenon could be taken into account by determining the worst case orientation of the element that might occur during operation of the transmission in relation to the element yawing motion. However, according to the invention, applying a factor of 80% or less to the maximum allowable axial play determined in relation to the element width and thickness may also provide suitable results in this respect.

According to the invention, the axial play between two adjacent elements should also satisfy a minimum value so as to allow a minimum amount of positional freedom there between and to provide some flexibility to the belt in axial direction. Such minimum value should at least allow a part of the belt trajectory that crosses between the pulleys to be oriented at a slight angle with respect to the radial direction to compensate for non-perfect pulley alignment, which aspect of the transmission is described in EP-A-0976949. Typically, a minimum amount of axial play of 0.01 mm would be required or about 0.005 of the element thickness.

Although, as is explained above and in the following, the measure according to the invention is relevant for virtually all known types of belt elements, it may in particular be applied favourably in the above-mentioned design having an upper element part with arm parts for contacting the pulley sheaves. Preferably, the projection and hole are then located at or near a rocking edge of the element that forms the transition from the upper element part to a tapered lower element part. Because in this element design the projection and hole need only engage in the axial direction -element pitching being prevented by the provision of the arm parts- and may therefore be favourable shaped oblong, possibly extending over the full radial (height) of the element.

The invention will now by way of example be elucidated further along a drawing in which:

figure 1 is a schematic representation of a continuously variable transmission in which a belt according to the invention is normally included;
figure 2 schematically indicates the feature addressed by the present invention at which transverse elements of the belt are located between the sheaves of a pulley in a skewed orientation ("element yawing")
figure 3 represents a side and a front elevation of a transverse element in designed in accordance with the invention;
figure 4 represents an alternative embodiment of the transverse element, also in accordance with the invention.

In the figures, identical reference numbers relate to identical or at least comparable technical features.

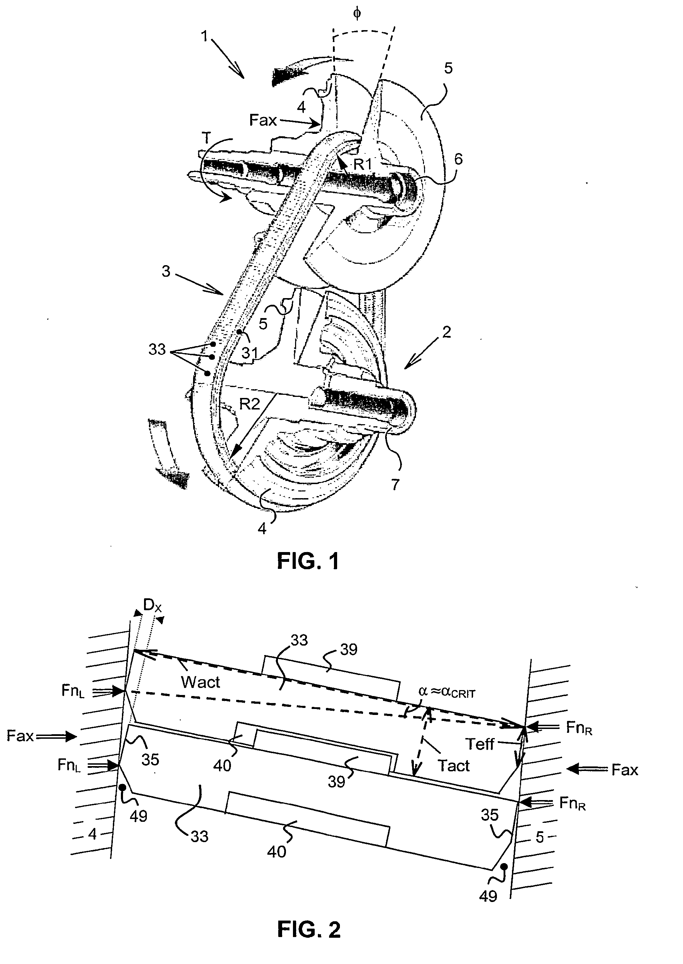

Figure 1 shows the central parts of a known continuous variable transmission, as is commonly applied in the drive line of personal vehicles between the engine and the drive wheels thereof. The transmission comprises two pulleys 1, 2, each provided with two pulley sheaves 4, 5, between which a metal push belt 3 is present for transmitting a rotational movement and an accompanying torque from the one pulley 4,5 to the other 4, 5. The pulley sheaves 4, 5 are generally shaped conical and at least one pulley sheave 4 is incorporated in the transmission axially moveable along a respective pulley shaft 6, 7 over which it is placed. The transmission generally also comprises activation means that impose on the said at least one sheave 4 an axially oriented clamping force Fax directed towards the respective other pulley sheave 5 such that the belt 3 is clamped there between.

The belt 3 comprises an endless tensile means 31 and a multitude of plate-like transverse elements 33 that are provided on the tensile means 31 oriented predominantly transversely thereto and movable along its longitudinal direction. The elements 33 take-up the clamping force Fax, such that at rotation of a driving pulley 1, friction between the sheaves 4, 5 and the belt 3, causes the elements 33 to be thrust from the driving pulley 1 to the driven pulley 2, around the drive pulley 2 and back to the driving pulley 1, thereby being guided and supported by the tensile means 31. A transmission ratio of the transmission is thereby determined and defined by the quotient of the effective radius of contact R1 of the belt 3 at the driving pulley 1 and the effective radius of contact R2 of the belt 3 at the driven pulley 2. Such transmission ratio may vary continuously in a range of transmission ratios, typically between a largest value of around 2.3, which is commonly denoted the Low transmission state, and a smallest value of around 0.45, which is commonly denoted the Overdrive transmission state.

Figure 2 represents a simplified top view of a cross-section of a trajectory part of the belt 3 between the sheaves 4, 5 of a pulley 1, 2 that is bent in the longitudinal direction as seen in radial inward direction. Representing a discovery during investigation of alternative transverse element designs, which underlies the present invention, the figure shows two elements 33 tilted about a radial axis such that they are oriented at an yaw angle $\alpha$ with respect to a theoretical perfect axial alignment thereof perpendicular to the pulley sheaves 4 and 5. The endless tensile means 31 have been omitted from the figure. The elements 33 of the belt 3 are each provided with a protruding part or projection 39 that engages a recessed part or hole 40 of a respectively adjacent element 33.

The skewed orientation of the elements 33 that has been observed in practice, alternatively referred to with the terms element yawing, is probably initiated because during operation a part of the belt trajectory that crosses between the pulleys may be oriented at a slight angle with respect to the radial direction. However, also other factors like difference in friction between the elements 33 and respective sheave 4, 5 may contribute to or be the primary cause of such element yawing. As indicated in figure 2, to assume the skewed orientation the adjacent elements 33 are required to mutually slide in a predominantly axial direction over a distance D, which may be approximated by the equation:

$$D = Tact \cdot \tan(\alpha) \tag{1}$$

Herein denotes Tact the actual thickness of the element 33, i.e. its nominal dimension in the longitudinal direction of the belt 3, as measured when the transverse element 33 is axially aligned.

Since the respective projection 39 and hole 40 mutually move over the same distance D, an axial play $D_X$ between the projection 39 and hole 40 the adjacent elements 33 determines a maximum value for the yaw angle $\alpha_{MAX}$ in one direction of rotation about the radial direction. Thus

$$\alpha_{MAX} = \arctan\left(\frac{D_X}{Tact}\right) \tag{2}$$

Because the elements 33 can in principle rotate both clockwise and anticlockwise starting from a mutually axially aligned position, the total amount of transverse play between the elements 33 amounts to twice the said axial play $D_X$.

The clamping force Fax exerted by the pulley sheaves on the belt 3 is also indicated in figure 2. This force Fax is distributed over the elements 33 that are located in the bent trajectory part of the belt 3 between the pulley sheaves 4, 5 and results in a force component Fn on each of the pulley contact faces 35 of the said elements 33. It is clear from the figure that the force components Fn working on either side of the element 33 can effect a force moment thereon, depending on the yaw angle $\alpha$.

Now, in accordance with the insight underlying the invention, the said element yawing is limited such that it is prevented that the element 33 assumes an unfavourable skewed orientation. According to the invention, such unfavourable orientation that is to be avoided corresponds to the situation where the forces $Fn_L$ and $Fn_R$ effected on the lateral side faces 35 of a respective element 33 effect a moment that would promote the element yawing. Referring to figure 2, wherein the elements 33 are depicted in a clockwise rotated skewed orientation, this situation would occur when the yaw angle $\alpha$ exceeds a critical value $\alpha_{CRIT}$, whereby a force component $Fn_L$ exerted on the left pulley contact face 35 of the element 33 is effected in front of a force component $Fn_R$ exerted on the right pulley contact face 35 of the element 33 and a clockwise oriented moment would be effected on the element 33. Instead, according to the present invention, the yaw angle $\alpha$ should thus be such that at all times during operation of the belt 3 the said moment of the respective force components $Fn_L$, $Fn_R$ urges back into a predominantly axially (width-wise) aligned orientation, which in this example would correspond to an anticlockwise moment to be effected by the said forces on the element 33. As explained in the above, the said axial play $D_X$ may be used to limit the yaw angle $\alpha$, such that the following equation may be derived in accordance with the present invention:

$$Dx \leq Tact \cdot \tan(\alpha_{CRIT}) \tag{3}$$

The critical value for the yaw angle $\alpha_{CRIT}$ occurs when the respective force components $Fn_L$, $Fn_R$ urge the element 33 back into a predominantly axially (width-wise) aligned orientation, which for a transverse element 33 having a predominantly square cross-section may be approximated by the following equation:

$$\alpha_{CRIT} = \arctan\left(\frac{Teff}{Wact}\right) \tag{4}$$

Herein denotes Wact the actual width of the element 33, i.e. its nominal dimension in the axial direction of the belt 3, as measured when the transverse element 33 is axially aligned and wherein Teff is an effective longitudinal dimension of the pulley contact faces 35 of element 33, i.e. a distance over which a pulley contact face 35 may arrive into contact with a pulley sheave 4, 5 when the transverse element 33 is axially aligned. Such effective thickness Teff may be equal to or less then the element's actual thickness Tact, which latter situation may for example arise as the result of the provision of a radially extending recess 49 at an edge of the pulley contact faces 35 forming a channel between adjacent elements 33 for accommodating lubrication fluid, or as an artefact of the manufacturing process of the elements, e.g. fine blanking.

By combining equations (3) and (4) the measure according to the invention may be quantified by the following equation:

$$D_X \leq \frac{Tact \cdot Teff}{Wact} \tag{5}$$

For transverse elements 33 of typical dimensions (approx. 1.5-2.0 mm width; approx. 24-30 mm width) this thus leads to a typical value for the maximum amount of axial play $D_X$ of about 0.11 mm.

In practice, it is often desirable that the actually applied axial play $D_X$ is smaller than approximately 80% of the maximum value thereof that is calculated with the aid of equation (4). Hereby, the inaccuracies (e.g. rectangular element cross-section), approximations (e.g. non-deformable elements 33 and sheaves 4, 5) and other modes of element movement (e.g. pitching) are favourably taken into account.

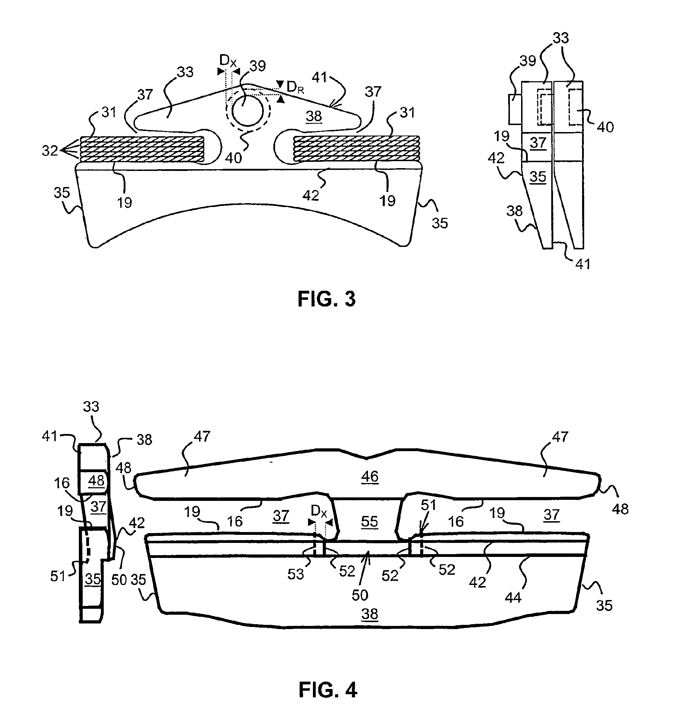

Figure 3 illustrates the measure according to the invention implemented in a transverse element design as commonly applied in the art, which design is described in more detail in, for example, the European patent publication EP-A-0626526 that is regarded included here by reference. The figure 3 depicts the element 33 as seen in the longitudinal direction of the belt 3 as well as in a simplified side elevation thereof. It is shown therein that the tensile means 31 is composed of two sets of radial nested thin metal rings 32, each set inserted into a predominantly transversely extending ring receiving recess 37 of the element 33 and supported by a bearing surface 19 of such recess 37.

The transverse elements 33 are provided with lateral side or pulley contact faces 35 that during operation are clamped between and arrive into frictional contact with the sheaves 4, 5 of the driving pulley 1 and of the driven pulley 2 respectively. For allowing a mutual rocking of the elements 33 about a generally axially oriented line of contact between two adjacent elements 33 in the said bent trajectory part of the belt 3, they are provided with a so-called rocking edge 42 on their respective front principle faces 38 defining an axially oriented, sharp or slightly rounded edge between two sections of the front principle face 38 that are mutually oriented at a small but notional angle. From the rocking edge 42 downwards, the element 33 is tapered, i.e. this radially inward located side of the element is provided with a dimension in the longitudinal direction of the belt 3 that is less than the essentially constant nominal thickness Tact of the element 33 above the rocking edge 42. The elements 33 are further provided with a projection 39 protruding from a front principle face 38 thereof, for interaction with a hole 40 provided in a back principle face 41 thereof as indicated by the dashed lines, so as to mutually align and/or position two adjacent transverse elements 33. Reference "$D_X$" illustrates the axial play $D_X$ between the element as defined in accordance with the present invention.

Hereby it is remarked that the known element design is provided with a defined amount of element play $D_R$ in the radial direction for various reasons, including the limitation of the above-mentioned element 33 rotation about the axial direction, alternatively denoted element pitching. Because often a cylindrical projection 39 and hole 40 are used and by the measure of the defined radial play $D_R$ more or less automatically also the same amount of axial play $D_X$ is included. However, such play $D_R$ defined in relation to element pitching is found to be larger than what is prescribed by the present invention. Moreover, according to several prior art documents that specifically relate to the feature of the axial play $D_X$ between adjacent elements 33, such as for example the European patent applications EP-A-0588416 and EP-A-0976949 appear to teach that a defined axial play $D_X$ is not required at all.

Still, the present invention is of particular relevance in relation to a novel transverse element design illustrated by figure 4, which design is described in more detail in the Dutch patent application NL-1022022. The transverse element is depicted as seen in the longitudinal direction of the belt 3 as well as in a simplified side elevation thereof. In this design an upper boundary 16 of the ring receiving recess 37, which forms a radial inward facing surface of an upper part 46 of the element 33, is axially extended compared to the conventional element design to form arm parts 47 that are designed and intended to contact the pulley sheaves 4, 5 through their respective predominantly axially oriented end face 48 in addition to the said pulley contact surfaces 35 positioned radially inward form the ring receiving recess 37. By the provision of these arm parts 47 element pitching was favourably prevented as intended, however, it was found in practice that element yawing occurred to a considerable extent.

Therefore, it is presently considered advantageous to provide for locking means 50, 51 for limiting relative axial movement of adjacent elements 33 also in combination with this novel element design. However, for this special element design these means 50, 51 need not limit relative radial movement between the elements 33 such that they may be shaped differently from the conventional projection 39 and hole 40, in particular such that they may be provided on the respective principle face 38, 41 of the element 33 in a favourably simple manner.

In the element embodiment illustrated in figure 4, the locking means 50, 51 are favourably provided with protruding part 50 having predominantly straight edges and located centrally on the front principle face 38 of the element at a radial level corresponding to that of the rocking edge 42 and extending in radial outward (upward) direction to beyond the radial level of the bearing surface 19 for supporting the tensile means 31. On the back principle face there is provided a recessed part 51 of corresponding shape, however, such that at least in both transverse directions, i.e. both to the left and to the right from a central position, a defined axial play $D_X$ is realised between the side planes 52, 53 of such protruding part 50 and of the recessed part 51 respectively. These side planes 52, 53 are spatially substantially oriented in the radial and longitudinal direction with the axial play $D_X$ defined there between in transverse direction. In this manner relative movement of adjacent elements 33 is limited in axial direction only. It was found that such locking means 50, 51 having straight edges can be manufactured relatively easy, in particular when blanking the element 33 from plate material.

Since the locking means 50, 51 are only required to limit relative axial movement, they may extend in radial direction of the entire dimension, alternatively denoted height, of the element 33 in the form of a ridge and a groove centrally located on the principle faces 38, 41. However, in the illustrated embodiment the protruding part 50, is provided with a backwards sloping front surface part 55, preferably starting substantially at the radial level of the bearing surface 19 and extending radially outwards, such that the protruding part 50 in the radial outward direction gradually becomes less protruding and finally merges with the front principle face 38 of the element 33, preferably substantially at the radial level of the upper boundary 16 of the ring receiving recess 37. In radially inward direction the protruding part 50 ends in a step 44 of the element 33, which step 44 is know per se and which extends in axial direction over the entire element width, thereby defining a transition in the element thickness.

Because the locking means 50, 51 are thus provided at least partly at the radial level of the rocking edge 42, an amount of protrusion of the protruding part 50 may be kept to a minimum, which feature is highly advantageous in combination with the preferred blanking process for manufacturing transverse elements 33. Generally speaking, in comparison with the above-mentioned predominantly cylindrical projection 39 and hole 40 the locking means 50, 51 in accordance with the present invention allows for a favourably more easy to perform element manufacturing process.

**Claims**

1. Push belt (3), in particular for application in a continuously variable transmission wherein the belt (3) is partly clamped between sheaves (4, 5) of a pulley (1, 2) of the transmission, comprising an endless tensile means (31) and a multitude of plate-like transverse elements (33) that are provided on the tensile means (31) oriented predominantly transversely thereto and movable along its longitudinal direction, which elements (33) each show at least one recess (37) for accommodating the endless tensile means (31), a pulley contact face (35) located radially inward from the recess (37) on either lateral side of the element (33) and locking means (39, 40; 50, 51) for limiting a relative movement in either transverse or axial direction between two adjacent elements (33), i.e. an axial play $D_X$, thereby limiting a rotation of the elements (33) about the radial direction of the belt (3), **characterised in that** the amount of axial play $D_X$ provided when clamped between the sheaves (4, 5) of a pulley (1, 2) limits the said rotation of the elements (33) around said radial direction by the said axial play $D_X$ being removed at such rotation, to the extent that a force moment effected on the elements (33) during operation of the belt (3) in the transmission by two axially oriented force components ($Fn_R$, $Fn_L$), each exerted on a respective pulley contact face (35) of the elements (33), counteracts such rotation by urging the element to rotate in opposite direction.

2. Push belt, in particular for application in a continuously variable transmission for motor vehicles, more in particular according to claim 1, comprising an endless tensile means (31) and a multitude of plate-like transverse elements (33) that are provided on the tensile means (31) oriented predominantly transversely thereto and movable along its longitudinal direction, which elements (33) each show at least one recess (37) for accommodating the endless tensile means (31), a pulley contact face (35) located radially inward from the recess (37) on either lateral side of the element (33), a projection protruding from a front principle plane (38) of the element (33) and a hole (40) provided in a back principle plane (38) of the element (33), whereby the projection (39) of one element (33) engages the hole (40) of an adjacent element (33) such that a movement in either transverse or axial direction of the said one element (33) with respect to the adjacent element (33) is limited to a defined distance, i.e. an axial play $D_X$, **characterised in that** the axial play $D_X$ provided when clamped between the sheaves (4, 5) of a pulley (1, 2) is equal to or smaller than the element's dimension in the longitudinal direction, i.e. an element thickness Tact, times an elements effective thickness Teff and divided by the element's dimension in the axial direction, i.e. an element width Wact, the element's effective thickness Teff thereby being defined as the distance in the longitudinal direction over which the pulley contact faces (35) of the element (33) may arrive into contact with the sheaves (4, 5) of a pulley (1, 2) of the transmission when the transverse elements are axially aligned.

3. Push belt (3) according to claim 2, **characterised in that** the axial play $D_X$ is larger than 0.005 times the element thickness Tact.

4. Push belt (3) according to claim 1 or 2, further comprising an arm part (47) located radially outward from the recess (37) on either lateral side of the element (33) and having a predominantly axially oriented end face (48) oriented substantially coplanar with a respective pulley contact face (35), **characterised in that** the elements are provided with locking means (50, 51) including a protruding part (50) protruding from a front principle plane (38) of the element (33) and a recessed part (51) provided in a back principle plane (38) of the element (33), whereby the protruding part (50) of one element (33) engages the recessed part (51) of an adjacent element (33), whereby by the interaction there between a movement in either axial direction of the said one element (33) with respect to the adjacent element (33) is limited to the axial play $D_X$, the protruding part (50) and the recessed part (51) respectively being provided with side planes (52, 53) substantially oriented in the radial and the longitudinal direction of the belt (3), and the protruding part (50) being located centrally on the front principle face of the element.

5. Push belt (3) according to claim 4, **characterised in that** the protruding part (50) is predominantly rectangular shaped.

6. Push belt (3) according to claim 4 or 5, **characterised in that** the protruding part (50) at least extends to a radial level corresponding to that of a rocking edge (42) of the element (33) defining an axially oriented, sharp or slightly rounded edge between two sections of the front principle face (38) that are mutually oriented at a small but notional angle along which edge (42) adjacent elements (33) may mutually tilt.

7. Push belt (3) according to any one of the claims 4-6, **characterised in that** the protruding part (50) includes a backwards sloping front surface part 55 extending radially outwards, such that the protruding part (50) in the radial outward direction gradually becomes less protruding and finally merges with the front principle face (38) of the element (33).

**Patentansprüche**

1. Schubriemen (3), insbesondere zur Anwendung in einem stufenlosen Getriebe, wobei der Riemen (3) zwischen den Rillenscheiben (4, 5) einer Rolle (1, 2) des Getriebes teilweise festgeklemmt ist, mit einem Endloszugmittel (31) und einer Vielzahl von plattenförmigen Querelementen (33), die in einer in erster Linie quer zum Zugmittel (31) verlaufenden Ausrichtung daran vorgesehen und entlang seiner Querrichtung beweglich sind, wobei diese Elemente (33) jeweils mindestens eine Aussparung (37) zur Aufnahme des Endloszugmittels (31), eine Rollenkontaktfläche (35), die sich radial einwärts der Aussparung (37) auf beiden lateralen Seiten des Elements (33) befindet, und Verriegelungsmittel (39, 40; 50, 51) zur Begrenzung einer Relativbewegung in einer Quer- oder Axialrichtung zwischen zwei benachbarten Elementen (33), das heißt eines axialen Spiels $D_x$, wodurch eine Drehung der Elemente (33) um die Radialrichtung des Riemens (3) begrenzt wird, aufweisen, **dadurch gekennzeichnet, dass** die Größe des axialen Spiels $D_x$, das bei Festklemmen zwischen den Rillenscheiben (4, 5) einer Rolle (1, 2) gebildet wird, die Drehung der Elemente (33) um die Radialrichtung begrenzt, indem das axiale Spiel $D_x$ bei solch einer Drehung in dem Maße entfernt wird, dass ein bei Betrieb des Riemens (3) im Getriebe durch zwei axial ausgerichtete Kraftkomponenten ($Fn_R$, $Fn_L$), die jeweils auf eine jeweilige Rollenkontaktfläche (35) der Elemente (33) ausgeübt werden, auf die Elemente (33) ausgeübtes Kraftmoment solch einer Drehung entgegenwirkt, indem es das Element zur Drehung in die entgegengesetzte Richtung drängt.

2. Schubriemen, insbesondere zur Anwendung in einem stufenlosen Getriebe für Kraftfahrzeuge, ganz besonders nach Anspruch 1, mit einem Endloszugmittel (31) und einer Vielzahl von plattenförmigen Querelementen (33), die in einer in erster Linie quer zum Zugmittel (31) verlaufenden Ausrichtung daran vorgesehen und entlang seiner Querrichtung beweglich sind, wobei diese Elemente (33) jeweils mindestens eine Aussparung (37) zur Aufnahme des Endloszugmittels (31), eine Rollenkontaktfläche (35), die sich radial einwärts der Aussparung (37) auf beiden lateralen Seiten des Elements (33) befindet, einen von einer vorderen Hauptebene (38) des Elements (33) vorstehenden Vorsprung und ein in einer hinteren Hauptebene (38) des Elements (33) vorgesehenes Loch aufweisen, wobei der Vorsprung (39) eines Elements (33) das Loch (40) eines benachbarten Elements (33) in Eingriff nimmt, so dass eine Bewegung entweder in Quer- oder in Axialrichtung eines Elements (33) bezüglich des benachbarten Elements (33) auf eine definierte Strecke, das heißt ein axiales Spiel $D_x$, begrenzt wird, **dadurch gekennzeichnet,**

**dass** das bei Festklemmen zwischen den Rillenscheiben (4, 5) der Rolle (1, 2) gebildete axiale Spiel $D_x$ kleiner gleich der Abmessung des Elements in Längsrichtung, das heißt einer Elementdicke Tact, mal der effektiven Dicke Teff des Elements geteilt durch das Maß des Elements in Axialrichtung, das heißt einer Elementbreite Wact, ist, wodurch die effektive Elementdicke Teff als die Strecke in Längsrichtung definiert wird, über die die Rollenkontaktflächen (35) des Elements (33) mit den Rillenscheiben (4, 5) einer Rolle (1, 2) des Getriebes in Kontakt treten können, wenn die Querelemente axial ausgerichtet sind.

**3.** Schubriemen (3) nach Anspruch 2, **dadurch gekennzeichnet, dass** das axiale Spiel $D_x$ größer als das 0,005-Fache der Elementdicke Tact ist.

**4.** Schubriemen (3) nach Anspruch 1 oder 2, weiterhin mit einem Armteil (47), der sich radial auswärts der Aussparung (37) auf beiden lateralen Seiten des Elements (33) befindet und eine in erster Linie axial ausgerichtete Endfläche (48) aufweist, die im Wesentlichen koplanar mit einer jeweiligen Rollenkontaktfläche (35) ausgerichtet ist, **dadurch gekennzeichnet, dass** die Elemente mit Verriegelungsmitteln (50, 51) versehen sind, die einen von einer vorderen Hauptebene (38) des Elements (33) vorstehenden vorragenden Teil (50) und einen in einer hinteren Hauptebene (38) des Elements (33) vorgesehenen ausgesparten Teil (51) enthalten, wobei der vorragende Teil (50) eines Elements (33) den ausgesparten Teil (51) eines benachbarten Elements (33) in Eingriff nimmt, wobei durch Zusammenwirkung dazwischen eine Bewegung in einer Axialrichtung des einen Elements (33) bezüglich des benachbarten Elements (33) auf das axiale Spiel $D_x$ begrenzt ist, wobei der vorragende Teil (50) und der ausgesparte Teil (51) jeweils mit Seitenebenen (52, 53) versehen sind, die im Wesentlichen in Radial- und Längsrichtung des Riemens (3) ausgerichtet sind, und wobei der vorragende Teil (50) mittig an der vorderen Hauptebene des Elements vorgesehen ist.

**5.** Schubriemen (3) nach Anspruch 4, **dadurch gekennzeichnet, dass** der vorragende Teil (50) in erster Linie rechteckig ausgebildet ist.

**6.** Schubriemen (3) nach Anspruch 4 oder 5, **dadurch gekennzeichnet, dass** sich der vorragende Teil (50) mindestens zu einer radialen Höhe erstreckt, die der eines Schwenkrands (42) des Elements (33) entspricht, der einen axial ausgerichteten, scharfen oder leicht abgerundeten Rand zwischen zwei Abschnitten der vorderen Hauptfläche (38) entspricht, die in einem kleinen, aber imaginären Winkel zueinander ausgerichtet sind, wobei benachbarte Elemente (33) entlang solch eines Rands (42) bezüglich einander kippen können.

**7.** Schubriemen (3) nach einem der Ansprüche 4 - 6, **dadurch gekennzeichnet, dass** der vorragende Teil (50) einen nach hinten geneigten Vorderflächenteil (55) aufweist, der sich radial nach außen erstreckt, so dass der vorragende Teil (50) in der radial nach außen verlaufenden Richtung allmählich weniger vorragt und letztendlich in die vordere Hauptfläche (38) des Elements (33) übergeht.

**Revendications**

**1.** Courroie de poussée (3), en particulier pour une application dans une transmission à variation continue dans laquelle la courroie (3) est en partie serrée entre les joues (4, 5) d'une poulie (1, 2) de la transmission, qui comprend un moyen de traction (31) sans fin et un grand nombre d'éléments transversaux (33) en forme de plaque qui sont prévus sur le moyen de traction (31), sont orientés essentiellement transversalement par rapport à ce dernier et sont mobiles le long de sa direction longitudinale, lesquels éléments (33) présentent chacun au moins un creux (37) destiné à loger le moyen de traction (31) sans fin, une face de contact (35) avec la poulie située radialement à l'intérieur du creux (37) sur les deux côtés latéraux de l'élément (33) et des moyens (39, 40; 50, 51) de verrouillage qui limitent le déplacement relatif aussi bien dans la direction transversale que dans la direction axiale entre deux éléments (33) adjacents, c'est-à-dire le jeu $D_x$, afin de limiter la rotation des éléments (33) autour de la direction radiale de la courroie (3), **caractérisée en ce que** l'amplitude du jeu axial $D_x$ que l'on observe lorsque les joues (4, 5) d'une poulie (1, 2) sont serrées limite ladite rotation des éléments (33) autour de ladite direction radiale en éliminant ledit jeu axial $D_x$ pour une telle rotation, pour autant que la force du couple appliqué sur les éléments (33) pendant le fonctionnement de la courroie (3) au cours de la transmission par deux composantes de force orientées axialement ($Fn_R$, $Fn_L$), chacune exercée sur une face (35) respective de contact des éléments (33) avec la poulie, contrecarre une telle rotation en amenant l'élément à tourner dans la direction opposée.

**2.** Courroie de poussée, en particulier pour des applications dans une transmission à variation continue pour des véhicules automobiles, plus particulièrement selon la revendication 1, qui comprend un moyen de traction (31) sans fin ainsi qu'un grand nombre d'éléments transversaux (33) en forme de plaque prévus sur le moyen de traction (31), orientés essentiellement transversalement par rapport à ce dernier et mobiles le long de sa direction longitudinale, lesquels éléments (33) présentent chacun au moins un creux (37) qui permet de loger le moyen de traction (31) sans fin, une face (35) de contact avec la poulie située radialement à l'intérieur du creux (37) sur les deux côtés latéraux de l'élément (33), une saille qui déborde du plan avant principal (38) de l'élément (33) et un trou (40) placé sur le plan arrière principal (38) de l'élément (33), la saillie (39) de l'élément (33) engageant le trou (40) d'un élément adjacent (33) de manière à ce que le déplacement aussi bien dans la direction transversale que dans la direction axiale dudit élément (33) par rapport à l'élément adjacent (33) soit limité à une distance définie, c'est à dire au jeu axial $D_x$, **caractérisée en ce que** le jeu axial $D_x$ que l'on observe lorsque l'on serre la courroie entre les joues (4, 5) de la poulie (1, 2) est égal ou inférieur à la dimension de l'élément dans la direction longitudinale, c'est-à-dire à l'épaisseur Tact de l'élément, multipliée par l'épaisseur effective Teff de l'élément et divisée par la dimension de l'élément dans la direction axiale, c'est-à-dire la largeur Wact de l'élément, l'épaisseur effective Teff de l'élément étant définie comme étant la distance dans la direction longitudinale sur laquelle les faces (35) de contact de la poulie de l'élément (33) peuvent être en contact avec les joues (4, 5) de la poulie (1, 2) de transmission lorsque les éléments transversaux sont alignés axialement.

3. Courroie de poussée (3) selon la revendication 2, **caractérisée en ce que** le jeu axial $D_x$ est supérieur à 0,005 fois l'épaisseur Tact de l'élément.

4. Courroie de poussée (3) selon les revendications 1 ou 2, qui comprend de plus une partie de bras (47) située radialement à l'extérieur du creux (37) sur les deux côtés latéraux de l'élément (33) et qui présente une face externe (48) orientée essentiellement axialement et essentiellement coplanaire avec la face (35) respective de contact avec la poulie, **caractérisée en ce que** les éléments sont dotés de moyens (50, 51) de verrouillage qui comprennent une partie (50) qui déborde du plan principal avant (38) de l'élément (33) et une partie en creux (51) prévue dans le plan principal arrière (38) de l'élément (33), la partie en saillie (50) d'un élément (33) s'engageant dans la partie en creux (51) d'un élément (33) adjacent, l'interaction entre un déplacement dans l'une ou l'autre direction axiale dudit un élément (33) par rapport à l'élément adjacent (33) étant limitée au jeu axial $D_x$, la partie en saillie (50) et la partie en creux (51) étant dotées de plans latéraux (52, 53) respectivement orientés essentiellement dans la direction radiale et dans la direction longitudinale de la courroie (3) et la partie en saillie (50) étant située au centre de la face principale avant de l'élément.

5. Courroie de poussée (3) selon la revendication 4, **caractérisée en ce que** la partie en saillie (50) présente une forme essentiellement rectangulaire.

6. Courroie de poussée (3) selon les revendications 4 ou 5, **caractérisée en ce que** la partie en saillie (50) s'étend au moins jusqu'à un niveau radial qui correspond à celui d'un bord (42) pivotant de l'élément (33) qui définit un bord orienté axialement, tranchant ou légèrement arrondi entre deux parties de la face principale avant (38) orientées l'une par rapport à l'autre sous un angle petit mais non nul, les éléments (33) adjacents pouvant s'incliner les uns par rapport aux autres le long de ce bord (42).

7. Courroie de poussée (3) selon l'une quelconque des revendications 4 à 6, **caractérisée en ce que** la partie en saillie (50) est une partie (55) de la surface avant qui s'incline vers l'arrière et qui s'étend radialement vers l'extérieur de manière à ce que dans la direction radiale externe, la partie en saillie (50) déborde de moins en moins et finalement coïncide avec la face principale avant (38) de l'élément (33).

**FIG. 1**

**FIG. 2**

**FIG. 3**

**FIG. 4**

**EP 1 676 049 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- NL 1022022
- EP 0329206 A
- EP 0626526 A
- EP 0976949 A
- EP 0588416 A